# EUROPEAN PATENT APPLICATION

(11) **EP 2 360 467 A1**
(43) Date of publication of application: **24.08.2011**
(21) Application number: 09823269.7
(22) Date of filing: 22.10.2009
(51) Int. Cl.: G01N 27/80

(54) **BARKHAUSEN NOISE INSPECTION APPARATUS AND INSPECTION METHOD**

(30) Priority: 28.10.2008 JP 2008276892
(71) Applicant: NTN Corporation, Osaka-shi, Osaka 550-0003 (JP)
(72) Inventor: MASUDA, Yui, Iwata-shi Shizuoka 438-0037 (JP); MIZUTANI, Masatoshi, Iwata-shi Shizuoka 438-0037 (JP)
(74) Representative: Gassner, Wolfgang
(86) International application number: PCT/JP2009/005538
(87) International publication number: WO 2010/050155

(57) **Abstract**

A Barkhausen noise inspection device of the present invention includes a detecting head (1), made up of an exciting coil (2) for magnetizing an object (30) to be inspected, a detecting coil (3) for detecting Barkhausen noises generated from the object (30) having been magnetized, and an electric power source (12) for supplying to the exciting coil (2) an alternating current necessary to generate an alternating magnetic field necessary for magnetization. A magnetic flux detecting sensor (6) is provided for detecting the magnitude of a magnetic flux used to excite the object (30). Also, an electric current control module (11) is provided for controlling the alternating current of the electric power source (12) on the basis of the magnitude of the magnetic flux, detected by the magnetic flux detecting sensor (6), to thereby maintain the magnitude of the magnetic flux, used to excite the object (30), at a constant value.

## Description

### BACKGROUND OF THE INVENTION

This application is based on and claims Convention priority to Japanese patent application No. 2008-276892, filed October 28, 2008, the entire disclosure of which is herein incorporated by reference as a part of this application.

The present invention relates to a Barkhausen noise inspection device used to perform the nondestructive test with the use of the Barkhausen noise and also to an inspection method using such inspection device.

### Description of Related Art

In the course of magnetization of a metallic material of a ferromagnetic body, Barkhausen noises are generated as a result of a discontinuity in movement of magnetic domain walls due to pinning by a non-magnetic material admixed in the metallic material and/or internal flaw. The magnitude of the Barkhausen noises so generated correlates with the hardness of and/or residual stress in the metallic material and, therefore, measurement of the Barkhausen noises provides information that can be usefully used in metallographic estimation of an object to be inspected such as a metallic material without destructing the latter.

As a non-destructive inspection device utilizing the Barkhausen noises, the Barkhausen noise inspection device has been known, which is used to inspect an object to be inspected with a detecting head held in contact with the object by the attendant technician. (See, for example, the Patent Document 1 listed below.) The detecting head employed in this known Barkhausen noise inspection device includes an exciting coil for magnetizing the object to be inspected and a detecting coil for detecting Barkhausen noises generated from the object after the latter has been magnetized. The Barkhausen noise inspection device disclosed in the Patent document 1 listed below requires a preparatory measurement of the relationship between the hardness of the material and the magnitude of Barkhausen noises for each of materials of the objects so that the inspection device can detect the presence or absence of flaw such as grinding burn left on a surface of the object, from the magnitude of the Barkhausen noises detected thereby.
[Patent Document 1] JP Laid-open Patent Publication No. H02-262958

A problem has, however, been found in that when the whole number of products mass-produced in a manufacturing plant are to be in-line inspected with the use of, for example, the Barkhausen noise inspection device of the kind referred to above, any change in manner of contact of the detecting head with the products from one product to another will adversely affect the magnitude of the Barkhausen noises being detected, and, therefore, an accurate measurement is difficult to achieve.

### SUMMARY OF THE INVENTION

An object of the present invention is to provide a Barkhausen noise inspection device and a Barkhausen noise inspection method capable of accomplishing an accurate measurement of the Barkhausen noises even though the manner of contact of the detecting head with the object changes from one object to another.

The Barkhausen noise inspection device designed in accordance with the present invention is a Barkhausen noise inspection device which includes a detecting head, made up of an exciting coil for magnetizing an object to be inspected and a detecting coil for detecting Barkhausen noises generated from the object having been magnetized, and an electric power source for supplying to the exciting coil an alternating current necessary to generate an alternating magnetic field necessary for magnetization, in which there are provided a magnetic flux detecting sensor for detecting the magnitude of a magnetic flux used to excite the object to be inspected and an electric current control module for controlling the alternating current of the electric power source on the basis of the magnitude of the magnetic flux, detected by the magnetic flux detecting sensor, to thereby maintain the magnitude of the magnetic flux, used to excite the object, at a constant value.

According to the present invention, since the provision has been made of the electric current control module for controlling the alternating current of the electric power source on the basis of the magnitude of the magnetic flux detected by the magnetic flux detecting sensor so that the magnetic flux used to magnetize the object to be inspected can be maintained at a constant value, the magnitude of the magnetic flux used to magnetize the object can be maintained at a constant value without being affected by any change in manner of contact of the detecting head with the object. As a result, even though the manner of contact of the detecting head with the object changes, the Barkhausen noises can be accurately measured.

In the practice of the present invention, the magnetic flux detecting sensor may be either a magnetic field sensor or a magnetic flux detecting coil which is wound around a magnetic core of the exciting coil, but separate from the exciting coil itself.

In the practice of the present invention, the electric current control module may include a magnetic flux calculating circuit for calculating the magnitude of the magnetic flux from an amplitude of the alternating current signal, which is an output from the magnetic flux detecting coil.

In the practice of the present invention, the electric current control module may be of a type capable of controlling the alternating current of the electric power source to a target value that is represented by a preset magnitude of the magnetic flux.

In the practice of the present invention, the electric current control module may have a function of variably setting to respective arbitrarily chosen values, the frequency and the magnitude of the magnetic flux generated from the exciting coil.

In the practice of the present invention, the Barkhausen noise inspection device may be used for detecting a surface information of a rolling unit component part. In such case, the surface information to be detected may be, for example, the presence or absence of grinding burn left on the surface. The rolling unit component part referred to above may be a component part forming a part of a rolling unit, which is a unit having rolling elements such as, for example, a rolling bearing, a ball screw or a constant velocity universal joint and a component part such as a bearing raceway ring forming a rolling surface for the rolling elements or the like.

The present invention also provides a Barkhausen noise inspection method which includes supplying an alternating current from an electric power source to an exciting coil, used to magnetize an object to be inspected, to thereby generate an alternating magnetic field, and detecting Barkhausen noises, generated from the object then magnetized, with a detecting head, in which the magnitude of a magnetic flux used to excite the object is detected by a magnetic flux detecting sensor and, based on the magnitude of the magnetic flux detected by the magnetic flux detecting sensor, the alternating current from the electric power source is controlled to thereby maintain the magnitude of the magnetic flux, used to excite the object, at a constant value.

According to the inspection method of the present invention, as is the case with the inspection device of the present invention, the Barkhausen noises can be accurately measured even though the manner of contact of the detecting head with the object changes.

### BRIEF DESCRIPTION OF THE DRAWINGS

0015 In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a schematic structural diagram showing a Barkhausen noise inspection device according to a first preferred embodiment of the present invention;
Fig. 2 is a schematic structural diagram showing a Barkhausen noise inspection device according to a second preferred embodiment of the present invention; and
Fig. 3 is an explanatory diagram showing one example of use of the Barkhausen noise inspection device.

### DESCRIPTION OF THE PREFERED EMBODIMENTS

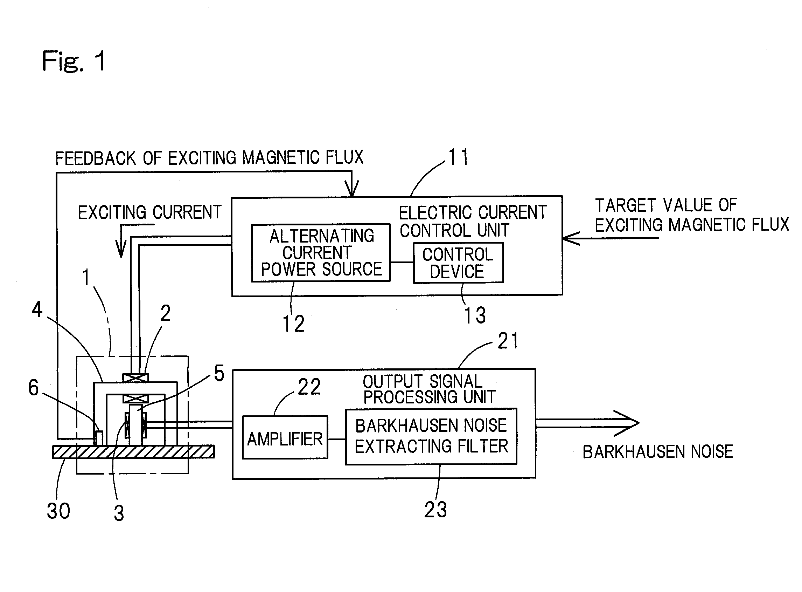

A first preferred embodiment of the present invention will now be described in detail with particular reference to Fig. 1. A Barkhausen noise inspection device according to this embodiment includes a detection head 1 made up of an exciting coil 2 and a detecting coil 3, an electric current control unit 11 including an alternating current power source 12 for supplying an electric alternating current necessary to cause the exciting coil 2 to generate an alternating magnetic field for magnetization, and an output signal processing unit 21 for processing an output signal from the detecting coil 3 to extract Barkhausen noises. During the inspection of an object 30 to be detected, the detecting head 1 is urged to contact a surface of the object 30.

The exciting coil 2 built in the detecting head 1 is in the form of a winding wound around an iron core 4 which is a magnetic core and is used to magnetize the object 30 to be inspected. Also, the detecting coil 3 also built in the detecting head 1 is in the form of a winding wound around an iron core 5 which is a magnetic core and is used to detect Barkhausen noises generated from the object 30 when the latter is magnetized. The iron core 4 is of a generally U-shaped configuration having its opposite arm ends which are held in face-to-face relation with the object 30 during the inspection taking place and, on the other hand, the iron core 5 is disposed intermediate between opposite arms of the iron core 4. Each of the iron cores 4 and 5 is prepared from a silicon steel lamination or a magnetic oxide such as, for example, ferrite. In a condition with the detecting head 1 held so as to confront a surface of the object 30 during the inspection taking place, the iron cores 4 and 5 are held in contact with the surface of the object 30.

The detecting head 1 referred to above is provided not only with the exciting coil 2 and the detecting coil 3, but also with a magnetic flux detecting sensor 6 for detecting the magnitude of a magnetic flux used to excite the object 30 to be detected. In the instance as shown, the magnetic flux detecting sensor 6 is employed in the form of a magnetic field sensor. The electric current control unit 11 is a module for controlling the alternating current of the alternating current power source 12, based on the magnitude of the magnetic flux detected by the magnetic flux detecting sensor 6, to thereby maintain the magnitude of the magnetic flux at a constant value and is provided not only with the alternating current power source 12, but also with a control device 13 for controlling the alternating current to be supplied from the alternating current power source to the exciting coil 2. The control device 13 is operable to control the alternating current of the alternating current power source 12 in response to a feedback signal indicative of the magnitude of the magnetic flux, detected by the magnetic flux detecting sensor 6, with the use of the target value represented by the preset magnitude of the magnetic flux, to thereby maintain the magnitude of the magnetic flux for exciting the object 30 at a constant value. For the target value used during this feedback control, the magnitude of the magnetic flux measured under such a condition that the detecting head 1 is held in normal contact with the object 30 to be inspected, that is, the detecting head 30 is held in contact with a surface of the object 30 without being locally lifted from the surface of the object 30 being inspected, is utilized. Also, the control device 13 has a function of adjustably setting the frequency and the magnitude of the magnetic flux to be generated from the exciting coil 2.

The output signal processing unit 21 includes an amplifier 22 for amplifying a detection signal outputted from the detecting coil 3 and an extracting filter 23 for extracting Barkhausen noise signal from the detection signal which has been amplified by the amplifier 22. In the extracting filter 23, the Barkhausen noise value, which is to be actually used, is calculated from the amplitude of an envelope curve, the average value or the maximum value of the extracted Barkhausen noise signal. Alternatively, the Barkhausen noise value referred to above may be the one represented the average value of Barkhausen noise values measured for a number of cycles of alternating magnetic fields.

Hereinafter, the operation of the Barkhausen noise inspection device and the Barkhausen noise inspection method will be described. When the detecting head 1 is brought into contact with the object 30 to be inspected, the iron cores 4 and 5 and the magnetic flux detecting sensor 6 are held in contact with the object 30 to establish a closed magnetic circuit made up of the iron core 4 and the object 30. The exciting coil 2, when supplied with the alternating current from the alternating current power source 12, generates an alternating magnetic field with which the object 30 is magnetized. The detecting coil 5 then detects Barkhausen noises generated by the object 30 having been magnetized. The Barkhausen noise signal indicative of the Barkhausen noises detected by the detecting coil 5 is fed from the detecting coil 5 to the output signal processing nit 21, where after the Barkhausen noise signal has been amplified by the amplifier 22, Barkhausen noises are extracted by the extracting filter 23.

Depending the manner of contact of the detecting head 1 with the object 30, the magnitude of the magnetic flux generated by the exciting coil 2 to excite the object 30 varies. The magnetic flux detecting sensor 6 detects the magnitude of this magnetic flux and the value of the magnetic flux so detected by the sensor 6 is fed back to the electric current control unit 11. In the control device 13 of the electric current control unit 11, using the target value represented by the preset magnitude of the magnetic flux, the alternating current supplied from the alternating current power source 12 can be controlled, based on the magnitude of the magnetic flux, detected by the magnetic flux detecting sensor 6, so that the magnitude of the magnetic flux used to excite the object 30 can be maintained at a constant value.

Accordingly, even though the manner of contact of the detecting head 1 with the object 30 changes, the magnitude of the magnetic flux used to excite the object 30 can be maintained at the constant value without being affected by the manner of contact of the detecting head 1 with the object 30. As a result, even though the manner of contact of the detecting head 1 with the object 30 changes, the Barkhausen noises can be measured accurately.

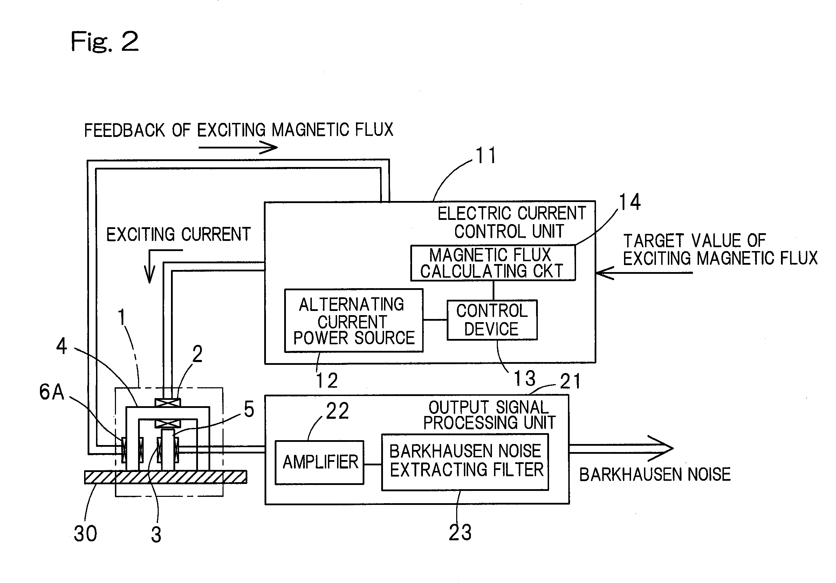

Fig. 2 illustrates the Barkhausen noise inspection device according to a second preferred embodiment of the present invention. This Barkhausen noise inspection device is substantially similar to that according to the first embodiment shown in and described with reference to Fig. 1, but differs therefrom in that the magnetic flux detecting sensor for detecting the magnitude of the magnetic flux used to excite the object 30 is employed in the form of a magnetic flux detecting coil 6A wound around the iron core 4, which is a magnetic core for the exciting coil 2, in a fashion separate from the exciting coil 2. Also, the electric current control unit 11 makes use of a magnetic flux calculating circuit 14 for calculating the magnitude of the magnetic flux from the amplitude of the alternating current signal which is an output of the magnetic flux detecting coil 6A. The magnetic flux calculating circuit 14 may be of a type capable of determining the magnitude of the magnetic flux by integrating the output of the magnetic flux detecting coil 6A. The control device 13 controls the alternating current supplied from the alternating current power source 12, based on the magnitude of the magnetic flux, calculated by the magnetic flux calculating circuit 14, with the use of the target value represented by the preset magnitude of the magnetic flux.

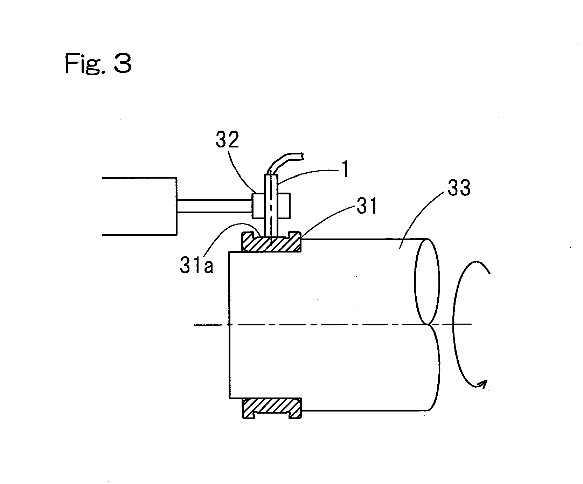

An example of a nondestructive inspection of the object with the use of the Barkhausen inspection device of the structure described hereinbefore is shown in Fig. 3. In describing the example, reference is made to the inspection performed to determine the presence or absence of a grinding burn left on a rolling surface 31a formed in an inner ring 31 of a bearing assembly. The detecting head 1 of the Barkhausen inspection device, then supported by a movable support member 32 so as to assume a position orthogonal or vertical to such rolling surface 31 a, is brought into contact with the rolling surface 31 on the bearing inner ring 31 vertically and detects the presence or absence of one or more grinding burn left on the rolling surface 31a while slidingly scans the rolling surface 31a during movement of the support member 32. During the inspection, the bearing inner ring 31 is mounted on a rotary shaft 33 and, accordingly, when the rotary shaft 33 is driven in one direction, the detecting head 1 can slidingly scan the entire circumference of the rolling surface 31a on the bearing inner ring 31 to inspect the presence or absence of the grinding burn on the rolling surface.

If the Barkhausen noise inspection device is used for an in-line analysis, the presence or absence of the grinding burn on the rolling surface 31a on the bearing inner ring 31 can be accurately inspected over the entire number of bearing inner rings and the quality assurance capability can be increased.

Although in describing the example with reference to Fig. 3, reference has been made to the inspection as to the presence or absence of the grinding burn on the rolling surface 31a of the bearing inner ring 31, surface information desired to be inspected may not be necessarily limited to the presence or absence of the grinding burn, but may be the presence or absence of residual stresses or flaws. Also, the object 30 to be inspected may not be necessarily limited to the bearing inner ring 31, but may be, for example, a bearing assembly. In addition, the object 30 to be inspected may not be necessarily limited to the bearing assembly, but may be a rolling unit or rolling unit component part. Even in this case, the surface information on the rolling unit or the rolling unit component part can be accurately detected without being adversely affected by the manner of contact. Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

1: Detecting head
2: Exciting coil
3: Detecting coil
4: Iron core (Magnetic core for the exciting coil)
5: Iron core (Magnetic core for the detecting coil)
6: Magnetic flux detecting sensor
6A: Magnetic flux detecting coil
11: Electric current control unit (Electric current control module)
12: Alternating current power source
13: Control device
14: Magnetic flux calculating circuit
30: Object to be inspected
31: Bearing inner ring (Rolling unit component part)

## Claims

1. A Barkhausen noise inspection device which comprises:
a detecting head comprising an exciting coil for magnetizing an object to be inspected and a detecting coil for detecting Barkhausen noises generated from the object having been magnetized;
an electric power source for supplying to the exciting coil an alternating current necessary to generate an alternating magnetic field necessary for magnetization;
a magnetic flux detecting sensor for detecting the magnitude of a magnetic flux used to excite the object to be inspected; and
an electric current control module for controlling the alternating current of the electric power source on the basis of the magnitude of the magnetic flux, detected by the magnetic flux detecting sensor, to thereby maintain the magnitude of the magnetic flux, used to excite the object, at a constant value.

2. The Barkhausen noise inspection device as claimed in claim 1, in which the magnetic flux detecting sensor is a magnetic field sensor.

3. The Barkhausen noise inspection device as claimed in claim 1, in which the magnetic flux detecting sensor is a magnetic flux detecting coil which is wound around a magnetic core of the exciting coil in a fashion separate from the exciting coil.

4. The Barkhausen noise inspection device as claimed in claim 3, in which the electric current control module comprises a magnetic flux calculating circuit for calculating the magnitude of the magnetic flux from an amplitude of the alternating current signal, which is an output from the magnetic flux detecting coil.

5. The Barkhausen noise inspection device as claimed in claim 1, in which the electric current control module is capable of controlling the alternating current of the electric power source to a target value that is represented by a preset magnitude of the magnetic flux.

6. The Barkhausen noise inspection device as claimed in claim 1, in which the electric current control module has a function of variably setting to respective arbitrarily chosen values, the frequency and the magnitude of the magnetic flux generated from the exciting coil.

7. The Barkhausen noise inspection device as claimed in claim 1, in which the Barkhausen noise inspection device is used for detecting a surface information on a rolling unit component part.

8. The Barkhausen noise inspection device as claimed in claim 7, in which the surface information to be inspected is a grinding burn left on a surface.

9. A Barkhausen noise inspection method which comprises:
supplying an alternating current from an electric power source to an exciting coil, used to magnetize an object to be inspected, to thereby generate an alternating magnetic field; and
detecting Barkhausen noises, generated from the object then magnetized, with a detecting head;
in which the magnitude of a magnetic flux used to excite the object is detected by a magnetic flux detecting sensor and, based on the magnitude of the magnetic flux detected by the magnetic flux detecting sensor, the alternating current from the electric power source is controlled to thereby maintain the magnitude of the magnetic flux, used to excite the object, at a constant value.
